# EUROPÄISCHE PATENTSCHRIFT

(11) **EP 1 076 085 B1**
(45) Veröffentlichungstag und Bekanntmachung des Hinweises auf die Patenterteilung: **31.05.2006**
(21) Anmeldenummer: 00116884.8
(22) Anmeldetag: 04.08.2000
(51) Int. Cl.: C08L 95/00, C10C 3/00

(54) **System zur Aufbereitung eines Asphaltgemisches mit einem Paraffinanteil**
System for preparation of an asphalt mixture comprising paraffin
Système de préparation d'un mélange asphaltique comprenant de paraffines

(30) Priorität: 09.08.1999 DE 19937546
(43) Veröffentlichungstag der Anmeldung: 14.02.2001
(73) Patentinhaber: ATS Asphalttechnik GmbH, 65760 Eschborn (DE); NMW Norddeutsche Mischwerke GmbH, 13597 Berlin (DE)
(72) Erfinder: Krausse, Wilhelm, 16761 Henningsdorf (DE); Krämer, Klaus, 61476 Kronberg (DE)
(74) Vertreter: Geyer, Fehners & Partner

(56) Entgegenhaltungen:
- DE-A- 4 329 459
- US-A- 2 108 784
- US-A- 2 145 784
- US-A- 3 251 508

## Beschreibung

Die Erfindung betrifft ein System zur Aufbereitung eines chemischen Gemisches, insbesondere eines Asphaltgemisches, mit einem Paraffinanteil.

Im Sinne der Erfindung werden unter Paraffinen alle schmelzfähigen Wachse und Wachsgemische verstanden, denen in geringem Umfang auch weitere Zuschlagstoffe beigefügt sein können. Die Erfindung eignet sich besonders zur Zugabe von Paraffinen bei der Asphaltherstellung. Sie kann jedoch überall dort eingesetzt werden, wo zumindest zeitweilig ein Bedarf für eine mengen- und temperaturgenaue Paraffinzugabe besteht.

Die physikalischen Eigenschaften von Asphalt werden wesentlich durch das Bindemittel Bitumen mitbestimmt. Dessen Eigenschaften können durch Zugabe von Paraffin verändert werden, wobei der Paraffinanteil im Bitumen ein wichtiger charakteristischer Parameter ist.

Die Wirkungen des Paraffins hängen von dessen Kristallisationsfähigkeit und Kristallstruktur ab. Makrokristallines Paraffin kann ein dreidimensionales Netzwerk aufbauen und weiche Bitumen versteifen, deren Kolloidsystem aus in Maltenen dispergierten Asphaltenen überwiegend im Solzustand vorliegt. Wenn durch eine temperaturbedingte Einlösung des Paraffins in die Maltenphase das Netzwerk plötzlich abgebaut wird, kommt es zu einem vergleichsweise starken Steifigkeitsverlust des Bitumens. Mikrokristallines Paraffin baut kein Netzwerk auf und verursacht keine Viskositätsanomalie. Seine relativ weichen Kristalle wirken im Sprödtemperaturbereich plastifizierend und begünstigen die Fließfähigkeit des Bitumens.

Einer gezielten und flexibel einstellbaren Paraffinzugabe kommt daher bei der Asphaltherstellung ein große Bedeutung zu.

Aus dem Stand der Technik sind zwar bereits beheizbare Transportbehälter für flüssige Stoffe bekannt. Jedoch sind diese lediglich für eine einmalige Anlieferung eines Stoffes im temperierten Zustand ausgelegt, so daß diese Behälter nach einem Entleeren zu einer Abfüllstation zurückgebracht werden müssen. Die Heizleistung solcher Behälter ist dementsprechend nicht geeignet, Stoffe vor Ort auf eine gewünschte, höhere Betriebstemperatur zu bringen. Insbesondere ist eine genaue Dosierung der Abgabemenge oder eine gezielte Einhaltung eines engen Abgabetemperaturbereiches vor Ort mit solchen Transportbehältern nicht möglich

US-A-325/508 beschreibt ein System zur Herstellung eines Bitumens unter Zunischung von Verdünnungsmitteln.

DE-A-43 29 459 beschreibt einen Bitumenmodificator und ein Verfahren zu seiner Herstellung.

Der Erfindung liegt demgegenüber die Aufgabe zugrunde, eine Bereitstellung von Paraffin zu ermöglichen, die den oben beschriebenen Anforderungen gerecht wird, insbesondere eine mengen- und temperaturgenauere Paraffindosierung erlaubt.

Diese Aufgabe wird durch ein System der eingangs genannten Art gelöst, das eine Paraffinschmelz- und -dosiervorrichtung mit einer Dosiereinheit zur Förderung einer einstellbaren Paraffinmenge aus einem Paraffintank in das Bitumen des Gemisches, eine Eingabevorrichtung zur Vorgabe eines gewünschten Paraffingehaltes in dem Gemisch, und eine Steuer und/oder Regelvorrichtung zur Einstellung der von der Paraffinschmelz- und -dosiervorrichtung abzugebenden Paraffindosis in Abhängigkeit der angeförderten Menge des Bitumen des Gemisches und des eingegebenen Paraffingehaltes aufweist.

Dies ermöglicht eine sehr genaue Einstellung der Menge des Paraffins. Die Paraffinzugabe in das Bitumen d.h. vor deren Vermengung mit weiteren Gemischkomponenten, bewirkt eine gute Verteilung des Paraffins in der betreffenden Stoffkomponente. Im Falle eines Asphaltgemisches, bei dem die Paraffinzugabe in die Bindemittelphase erfolgt, ergibt sich hierdurch eine Verringerung der Prozeßtemperaturen um 20 bis 30° C in einem nachfolgenden Asphaltmischer, ohne daß durch die niedrigeren Temperaturen des thermischen Prozesses die Qualität der hergestellten Asphalts beeinträchtigt wird. Daraus resultiert ein beträchtliches Energieeinsparungspotential sowie eine Verminderung der herstellungsbedingten Emissionen. Die Paraffinzufuhr erfolgt über eine Leitung in eine Zufuhrvorrichtung des Bitumen des Gemisches stromauf oder am Eingang einer Gemischaufbereitungsvorrichtung. Diese besonders frühzeitige Zudosierung erlaubt die Ausnutzung von Mischungseffekten bei der Anförderung der Stoffkomponente und damit eine gute Durchmischung, so daß der Aufwand für zusätzliche mechanische Mischvorrichtungen gering gehalten werden kann.

Vorzugsweise ist eine Vormischvorrichtung für das Bitumen mit dem Paraffin vorgesehen, in welche die Zufuhrvorrichtung des Bitumens über eine Eindüsvorrichtung mündet. Dies erlaubt nicht nur eine gute Verteilung des Bitumens in dem chemischen Gemisch, sondern gleichzeitig auch eine gute Verteilung des Paraffins.

Das erfindungsgemäße System ist vorzugsweise solchermaßen ausgebildet, daß es einfach an unterschiedliche Dosiervorrichtungen ankoppelbar ist. In einer besonderes günstigen Ausgestaltung wird die Zudosierung von Paraffin in eine Leitung des Bitumens in Abhängigkeit des Volumenstromes des Bitumens gesteuert, beispielsweise nach dem Saugstrahlprinzip oder auch durch eine meßtechnische Erfassung des Bitumen stromes und eine entsprechende Einstellung der Dosiereinheit in Abhängigkeit des Durchflusses.

Alternativ oder in Ergänzung hierzu erfolgt die Zudosierung von Paraffin in Bezug auf das Bitumen des Gemisches massengesteuert, so daß das System auch in einem Chargenbetrieb diskontinuierlich gefahren werden kann.

In einer weiter vorteilhaften Ausgestaltung ist eine Bitumenwaage mit einem Sammelbehälter vorgesehen. Die Steuer- und/oder Regelvorrichtung ist derart ausgebildet, daß vorbestimmte Mengen des Bitumens und des Paraffins in den Behälter gefördert werden, und daß A bei Erreichen einer vorbestimmten Gesamtmenge der Behälterinhalt zur Gemischaufbereitung über eine gemeinsame Förderleitung weitergeleitet wird. Zur Anförderung des Bitumens und und des Paraffins sind hingegen separate Leitungen vorgesehen. Dies erlaubt in einfacher Weise eine unabhängige Mengenüberwachung der einzelnen Bestandteil des Vorgemisches.

Zur Vermeidung von Oxidationen ist es jedoch vorteilhaft, wenn die Paraffinzufuhrleitung stromauf der Wägevorrichtung unmittelbar in eine Butimen zufuhrleitung mündet.

Zur Verbesserung der Durchmischung trägt weiterhin eine Förderpumpe, beispielsweise eine Zahnradpumpe oder Schraubenspindelpumpe bei, die in der Förderleitung zwischen dem Behälter der Wägevorrichtung und der Zufuhrvorrichtung des Butimens angeordnet ist.

Nach einer weiteren vorteilhaften Ausgestaltung ist das System modular aus einer Asphaltaufbereitungsvorrichtung, und der Paraffinschmelz- und -dosiervorrichtung gebildet. Die Paraffinschmelz- und -dosiervorrichtung ist als transportable Einheit an die Asphaltbereitungsvorrichtung an- und abkoppelbar.

Durch die modulare Ausbildung kann die erfindungsgemäße Paraffinschmelz- und -dosiervorrichtung schnell an einem beliebigen Ort zum Einsatz gebracht werden. Größere Anpassungsmaßnahmen können dort vermieden werden. Insbesondere ist es nicht nötig, eine technische Anlage, bei der lediglich ein vorübergehender Paraffinbedarf auftritt, dauerhaft mit entsprechenden Vorrichtungen auszurüsten. Trotzdem kann eine genaue, temperaturgesteuerte Dosierung von Paraffinen erreicht werden, beispielsweise um in einer Asphaltherstellungsvorrichtung das Bindemittel Bitumen bedarfsgerecht einzustellen. Da die erfindungsgemäße Paraffinschmelz- und -dosiervorrichtung als autarke Einheit am Aufstellungsort betrieben wird, kann der gefahrenträchtige Transport von heißem, flüssigen Paraffin vermieden werden. Zudem ist eine Erschmelzung auch erst vor Ort möglich

In einer vorteilhaften Ausgestaltung dieses Gedankens sind der Paraffintank zum Aufschmelzen von Paraffin und zur Lagerung des aufgeschmolzenen Paraffins, eine Heizvorrichtung zur indirekten Beheizung des Inhaltes des Paraffintanks und die Dosiereinheit zur gesteuerten Abgabe von Paraffin aus dem Paraffintank gemeinsam an einem Rahmen unter Bildung einer transportablen Einheit gelagert. Dies erlaubt einen schnellen und flexiblen, ortsungebundenen Einsatz, was überall dort von Vorteil ist, wo lediglich zeitweilig ein Bedarf an Paraffin besteht. Die indirekte Beheizung des Paraffintanks bewirkt überdies eine besonders schonende Erhitzung des Paraffins sowie einen zusätzlichen Sicherheitsgewinn.

Nach einer vorteilhaften Ausgestaltung ist zur Optimierung der Transportfähigkeit der Paraffinschmelz- und -dosiervorrichtung deren Rahmen in einen im wesentlichen quaderförmigen Container integriert, wobei der Paraffintank, die Heizvorrichtung und die Dosiervorrichtung in dem Container aufgenommen sind. Die Außenmaße des Containers entsprechen vorzugsweise den Maßen üblicher Transportcontainer, so daß herkömmliche Transportmittel verwendet werden können. Da der Transport ohne heißes Paraffin erfolgt, müssen keine besonderen Sicherheitsschutzmaßnahmen ergriffen werden. Der Container kann ohne Fundamente oder sonstige bauliche Vorbereitungen aufgestellt werden.

Nach einer vorteilhaften Ausgestaltung weist die Dosiereinheit eine Förderpumpe zum Ansaugen von flüssigem Paraffin aus dem Paraffintank und zum Transport in eine Abgabeleitung auf, wobei der Förderpumpe in der Abgabeleitung ein Überströmventil mit einem einstellbaren Druckniveau nachgeschaltet ist, derart, daß überschüssiges Paraffin in den Paraffintank zurückgeleitet wird. Dies ermöglicht eine vollautomatische Umwälzung des flüssigen Paraffins auch dann, wenn gerade keine Abgabe erfolgt, wodurch, eine gleichmäßige Konsistenz und Temperatur des Paraffins gewahrt werden kann. Die Förderpumpe ist vorzugsweise eine Schraubenspindelpumpe, mit der sich eine besonders gute Dosiergenauigkeit erzielen läßt.

Vorzugsweise ist zur Abgabe gezielter Paraffinmengen die Dosiereinheit mit einem steuerbaren Absperrventil versehen, das in der Abgabeleitung angeordnet ist, und das zur Abgabe von Paraffin in Abhängigkeit eines Fördersignals geöffnet und geschlossen wird. Die Generierung des Fördersignals kann dabei in der Paraffinschmelz- und -dosiervorrichtung oder auch extern erfolgen. Durch Schließen des Ventils wird der Abgabestrom unterbrochen. Hiermit läßt sich eine vollautomatische Chargierung im Sinne einer zyklischen Dosierung verwirklichen.

Alternativ hierzu weist die Dosiereinheit ein Durchflußventil auf, das in der Abgabeleitung angeordnet ist, und das zur Einstellung der Abgabemenge von Paraffin in Abhängigkeit eines Mengensignals gesteuert wird. Neben einer vollautomatischen Chargierung im Sinne einer zyklischen Dosierung kann auch eine sollwertgesteuerte, kontinuierliche Paraffinabgabe verwirklicht werden.

Im Fall einer Zudosierung in einen Stoffstrom werden Maßnahmen zur Gewährleistung eines konstanten Mischungsverhältnisses getroffen, beispielsweise durch eine Zuförderung nach dem Prinzip einer Saugrohrpumpe oder durch eine Erfassung der Fördermenge des Stoffstromes und eine entsprechende Betätigung des Ventils in der Abgabeleitung.

Zur Überwachung der abgegebenen Paraffinmenge und zur Einhaltung einer genauen Dosiermenge weist die Dosiereinheit eine Durchflußmeßvorrichtung auf, die in der Abgabeleitung angeordnet ist. Ein der Durchflußmenge entsprechendes Signal kann zur Rückkopplung in einer Regelungsvorrichtung für die Abgabemenge verwendet werden. Gleichfalls kann die abgegebene Paraffinmenge bestimmt und zusätzlich der Füllstand des Paraffintanks mitüberwacht werden.

Nach einer vorteilhaften Ausgestaltung der Erfindung weist die Heizvorrichtung eine Kreislaufleitung mit einer sich in den Paraffintank erstreckenden Wärmetauschvorrichtung auf, die mit einem Wärmeträgerfluid befüllt ist. Die Heizvorrichtung weist weiterhin einen Erhitzer auf, an den die Kreislaufleitung angeschlossen ist. Als Wärmeträgerfluide kommen synthetische Thermalöle oder Thermalöle auf synthetischer Basis zum Einsatz. Vorzugsweise werden solche Öle verwendet, die voll biologisch abbaubar und nichtwassergefährdend sind. Durch die mittelbare Erhitzung des Paraffintanks kann eine besonders sichere und schonende Erhitzung und Temperierung des Paraffins erzielt werden. Störung der Heizvorrichtung werden von dem heißen Paraffintankinhalt ferngehalten.

Vorzugsweise weist die Kreislaufleitung eine die Wärmetauschvorrichtung überbrückende Verbindung auf, die außerhalb des Paraffintanks verläuft, wobei der überbrückenden Verbindung oder Leitung und der Wärmetauschvorrichtung ein Umschaltventil vorgeschaltet ist, derart, daß in Abhängigkeit eines die Temperatur in dem Paraffintank repräsentierenden Signals das Wärmeträgerfluid mittels des Umschaltventils entweder über die Wärmetauschvorrichtung oder aber über die überbrückende Verbindung unter Absperrung des jeweils anderen Teils zirkuliert wird. Hierdurch kann eine bei Bedarf schnelle Abschaltung der Wärmezufuhr zu dem Paraffintank erfolgen. Durch das Vorhalten des temperierten Wärmeträgerfluids kann genauso schnell auf einen kurzfristig erhöhten Wärmebedarf reagiert werden, beispielsweise bei der Nachfüllung von kälterem Paraffin im kontinuierlichen Betrieb. Zu diesem Zweck wird eine ausreichend bemessene Wärmeträgerfluidmenge vorgehalten und von der Heizvorrichtung auf Temperatur gehalten.

Zur Vermeidung der Bildung eines zündfähigen Gemisches und einer vorzeitigen Alterung des Wärmeträgerfluids ist der Wärmeträgerfluidkreislauf vorzugsweise nach außen abgeschlossen und inertgasüberlagert.

Nach einer vorteilhaften Ausgestaltung ist eine Steuer- und/oder Regelvorrichtung zur Einstellung der Temperatur in dem Paraffintank und der mittels der Dosiervorrichtung abzugebenden Paraffinmenge in der transportablen Einheit vorgesehen, wodurch im Inselbetrieb ein genaue Dosierung bei präzise einhaltbaren Temperaturen möglich ist.

Vorzugsweise ist die Steuer- und/oder Regelvorrichtung über eine Datenleitung mit einer externen Befehlszentrale koppelbar, beispielsweise mit der Meßwarte einer weiteren technischen Vorrichtung. In diesem Fall können die Eingabe- und Programmiervorrichtungen der externen Befehlszentrale auch für die Paraffinschmelz- und -dosiervorrichtung genutzt werden, so daß die entsprechenden Eingabe- und Programmiervorrichtungen an der Paraffinschmelz- und -dosiervorrichtung auf ein Minimum reduziert werden können. Die Datenübertragung erfolgt dabei vorzugsweise über genormte Schnittstellen. In einer weiteren Ausgestaltung ist eine Sollwerteingabevorrichtung lediglich in der Befehlszentrale vorgesehen.

Das System eignet sich besonders für die Asphaltherstellung, wobei dann das chemische Gemisch ein Asphaltgemisch und die Stoffkomponente ein Bindemittel, Bitumen, ist. Zur Verbesserung der Gemischaufbereitung weist die Asphaltaufbereitungsvorrichtung eine mechanischen Vormischvorrichtung zum Vermengen des Paraffins mit dem Bindemittel auf, die vor einem eigentlichen, Asphaltmischer angeordnet ist.

Die Erfindung wird nachfolgend anhand eines in der Zeichnung dargestellten Ausführungsbeispiels näher erläutert.

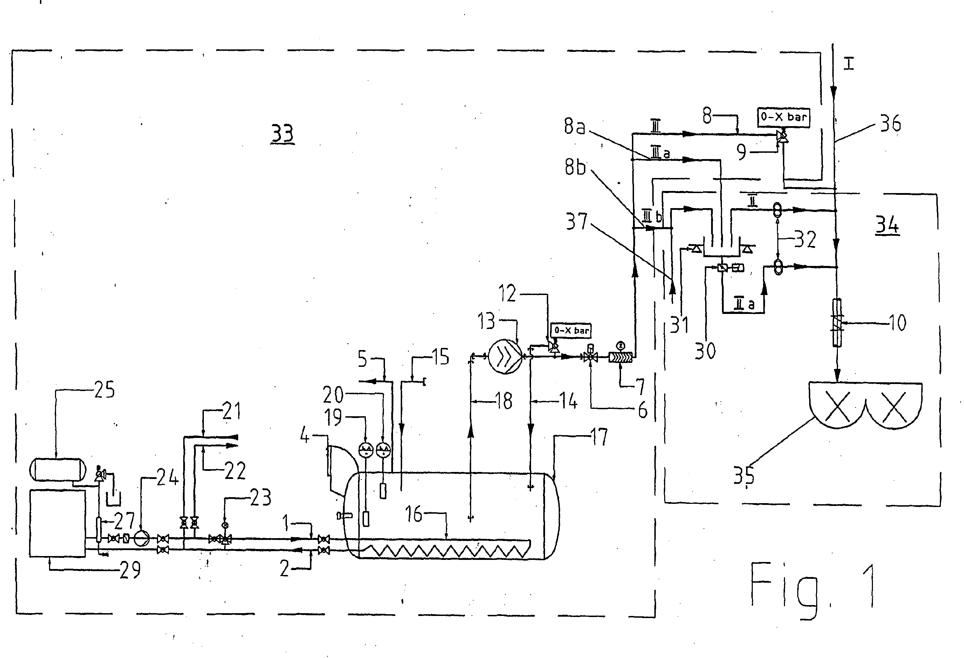

- Fig. 1: zeigt eine schematische Darstellung eines Systems zur Asphaltaufbereitung mit einer Paraffinschmelz- und -dosiervorrichtung und einer Asphaltaufbereitungsvorrichtung.

Das System zur Asphaltaufbereitung nach dem Ausführungsbeispiel ist modular aus einer Asphaltaufbereitungsvorrichtung 34 und einer Paraffinschmelz- und -dosiervorrichtung 33 - zusammengesetzt. Je nach den Anforderungen an den Asphalt kann Paraffinschmelz- und -dosiervorrichtung 33 der Asphaltaufbereitungsvorrichtung 34 zugeschaltet werden, um über eine Paraffinzugabe eine die Eigenschaften eines Asphaltgemisches gezielt einzustellen. Die Zugabe des Paraffins in das Asphaltgemisch erfolgt dabei vor dessen thermischer Aufbereitung in einem Asphaltmischer 35.

Zunächst wird die Paraffinschmelz- und -dosiervorrichtung 33 des Ausführungsbeispiels beschrieben. Diese umfaßt einen Paraffintank 17, eine Heizvorrichtung mit einem Erhitzer 29 und einer Wärmeträgerkreislaufleitung 1, 2, und eine Dosiereinheit mit den Komponenten 6, 7, 12, 13, 14 und 18.

Sämtliche Elemente der Paraffinschmelz- und -dosiervorrichtung 33 sind an einem Rahmen gelagert, der in einen quaderförmigen Container integriert ist, wobei die genannten Elemente innerhalb der Grenzen des Containers bleiben. Diese Grenzen sind in der Figur 1 durch die gestrichelten Linien und das Bezugszeichen 33 schematisch angedeutet. Sie stellen gleichzeitig auch die Systemgrenzen der Paraffinschmelz- und -dosiervorrichtung 33 dar. Die Außenmaße des Containers entsprechen den Maßen üblicher Normcontainer, so daß dieser mit herkömmlichen Transportmitteln bewegt werden kann. Zur Verbindung der Paraffinschmelz- und -dosiervorrichtung 33 mit Teilen einer Asphaltaufbereitungs- bzw. - herstellungsvorrichtung 34 sind in oder an dem Container entsprechend geeignete Paraffinleitungsanschlüsse sowie Datenschnittstellen vorgesehen.

Der Paraffintank 17, dessen Volumen in der Größenordnung von etwa 800 bis 5000 Litern liegt, ist als wärmeisolierter Behälter mit Blechummantelung ausgeführt und über eine Paraffinsaugleitung 18 und eine beheizte Rücklaufleitung 14 mit einer Förderpumpe 13 der Dosiereinheit verbunden. Weiterhin ist im Bodenbereich des Tankinnenraumes eine Wärmetauschvorrichtung 16 in Form eines Lamellenheizregisters angeordnet, die in die bereits erwähnte Kreislaufleitung 1, 2 eingegliedert ist, die zu dem Erhitzer 29 der Heizvorrichtung läuft.

Zur Zufuhr von Paraffin und Zuschlagstoffen in den Paraffintank 17 ist seitlich an diesem eine Beschickungsschleuse 4 mit einer im Normalfall durch einen öffenbaren Deckel abgedichteten Beschickungsöffnung vorgesehen. Das Paraffin kann beispielsweise in festem Zustand auch von Hand durch die Beschickungsschleuse 4 in den Paraffintank 17 eingeführt werden. Zusätzlich weist der Paraffintank 17 eine Zuflußleitung 15 für flüssige Stoffe auf, über die beispielsweise Fluxöle, flüssiges Paraffin oder sonstige flüssige Zuschlagsstoffe in den Paraffintank eingebracht werden können. Der Zuflußleitung 15 kann eine Vorrichtung zur Vortemperierung der Zuschlagstoffe vorgeschaltet werden, wobei die Beheizung mit Hilfe des Wärmeträgermediums der Heizvorrichtung erfolgen kann. Eine Befüllung mit Paraffingranulat kann auch über eine nicht dargestellte Förderschnecke erfolgen.

Weiterhin ist eine Tankentlüftung 5 vorgesehen. Zur Überwachung des Füllstandes kommen zwei in dem Paraffintank 17 angeordnete Sensoren 19, 20 zum Einsatz, die bei Unterschreiten eines minimalen Füllstandes und bei Überschreiten eines maximalen Füllstandes ansprechen und ein Warnsignal abgeben, sowie nötigenfalls eine weitere Beheizung oder Paraffinabgabe unterbrechen und die Anlage herunterfahren.

Die zum Schmelzen und zur Temperierung des in dem Paraffintank 17 befindlichen Wachsgemisches erforderliche Wärmemenge wird von dem Erhitzer 29 der Heizvorrichtung bereitgestellt und über das Wärmeträgerfluid in der Kreislaufleitung 1, 2 übertragen. Die Temperierung des Wachsgemisches erfolgt stufenlos in einem Bereich bis etwa 150° C im Paraffintank 17. Die Vorlauftemperatur für das Wärmeträgerfluid des Lamellenheizregisters liegt bei maximal 200° C.

Zwischen der Zuleitung 1 der Kreislaufleitung in den Paraffintank 17 und der Ableitung 2 der Kreislaufleitung aus dem Paraffintank 17 ist eine die Wärmetauschvorrichtung 16 überbrückende Verbindung vorgesehen, die außerhalb des Paraffintanks liegt. Die überbrückende Verbindung ist hier als 3-Wege Motor-Umschaltventil 23 ausgebildet, das derart angesteuert ist, daß in Abhängigkeit eines die Temperatur in dem Paraffintank 17 repräsentierenden Signals das Wärmeträgerfluid in der Kreislaufleitung entweder über die Wärmetauschvorrichtung 16 oder aber über die Überbrückungsverbindung unter Absperrung des jeweils anderen Teils zirkuliert wird.

Die Kreislaufleitung ist weiterhin durch den Erhitzer 29 geführt, der hier als elektrischer, in seinem Leistungsbereich regelbarer Erhitzer ausgebildet. Das erhitzte Wärmeträgerfluid wird mittels einer in dem Kreislauf angeordneten Förderpumpe 24 zirkuliert, die in der Zulaufleitung 1 hinter einem Gasabscheider 27 angeordnet ist. Der Kreislauf ist weiterhin mit einem stickstoffüberlagerten Ausdehnungsbehälter 25 verbunden, so daß sich ein nach außen abgeschlossener und inertgasüberlagerter Wärmeträgerfluidkreislauf ergibt. Eine vorzeitige Alterung des Fluids wird damit vermieden. Als Wärmeträgerfluid wird hier vorzugsweise das Thermalöl ATS-BIPROTHERM der Anmelderin verwendet, das nichtwassergefährdend ist.

Zur Beheizung der Armaturen und Paraffinleitungen der Paraffinschmelz- und -dosiervorrichtung zweigen von dem Kreislauf 1, 2 weitere Leitungen ab, von denen in der Figur lediglich eine Zu- und eine Ableitung 21, 22 beispielhaft angedeutet sind.

Die Dosiervorrichtung der Paraffinschmelz- und -dosiervorrichtung 33 weist eine Förderpumpe 13 als Dosierpumpe auf, die über die Saugleitung 18 flüssiges Paraffin aus dem Paraffintank 17 ansaugt und mit einem einstellbaren Druck in eine Abgabeleitung fördert. Der Förderpumpe 13, die hier als besonders genaue Schraubenspindelpumpe ausgebildet ist, ist in der Abgabeleitung ein Überströmventil 12 mit einem einstellbaren Druckniveau nachgeschaltet, so daß in der Abgabeleitung ein Druck im Bereich von etwa 4 bis 9 bar eingestellt werden kann. Überschüssiges Paraffin wird von dem Überströmventil 12 über die beheizte Rücklaufleitung 14 in den Paraffintank 17 zurückgeleitet. Die damit verbundene Zirkulation bewirkt eine gute Durchmischung des Tankinhaltes und erlaubt eine Abgabe von Paraffin mit gleichbleibender Zusammensetzung.

Dem Überströmventil 12 ist in der Abgabeleitung ein steuerbares Absperrventil 6 nachgeordnet Dieses Absperrventil 6 ist ein Kugelhahn mit Schwenkantrieb, der zur Abgabe von Paraffin in Abhängigkeit eines Fördersignals geöffnet wird, um so eine bestimmte Paraffinmenge abzugeben. In einer Variante des Ausführungsbeispiels ist das Ventil 6 als Strömungsregelventil ausgebildet, das zur Einstellung der Abgabemenge von Paraffin in Abhängigkeit eines Mengensignals gesteuert wird, d.h. entsprechend weiter oder geringer geöffnet wird.

Weiterhin ist in der Abgabeleitung eine Durchflußmeßvorrichtung 7 vorgesehen, die ein dem Paraffinvolumenstrom entsprechendes Signal erzeugt, das je nach Bedarf beispielsweise zu Informationszwecken oder aber auch zur Steuerung oder Regelung der Paraffinabgabemenge ausgewertet wird.

Die eigentliche Abgabe des Paraffins nach außen erfolgt über eine beheizte Leitung 8, die durch ein Rückschlagventil 9 gegen ein Eindringen von Fremdstoffen gesichert ist. Die Beheizung der Leitung 8 kann wie auch bei allen anderen Leitungen oder Armaturen der Paraffinschmelz- und -dosiervorrichtung über das Wärmeträgerfluid erfolgen. Alternativ können auch elektrisch beheizte Leitungen und Armaturen eingesetzt werden, deren Temperatur jeweils auf einem gewünschten Niveau gehalten wird.

Die beschriebene Paraffinschmelz- und -dosiervorrichtung 33 ist universell für verschiedene Dosiersysteme ausgebildet und kann daher für die Zudosierung in volumetrischen Dosiersystemen wie auch in gravimetrishcen Dosiersystemen eingesetzt werden. Beide Möglichkeiten werden hier in Zusammenhang mit der Asphaltaufbereitungsvorrichtung 34 dargestellt, die im folgenden näher beschrieben wird.

Die Asphaltaufbereitungsvorrichtung 34 weist einen Asphaltmischer 35 auf, in dem die thermische Aufbereitung des Asphaltgemisches aus einem Bindemittel, d.h. Bitumen, und entstaubtem, mineralischen Material, d.h. körnigen Gesteinspartikeln, bei erhöhten Temperaturen erfolgt.

Dem eigentlichen Asphaltmischer 35 ist ein Rohrmischer 10 vorgeschaltet, in dem Bitumen als Bindemittel aufbereitet wird. Die Bitumenzufuhr erfolgt über eine Bitumenförderleitung 36, von der aus das Bindemittel in den Rohrmischer 10 eingedüst wird. Wird die Dosiervorrichtung der Paraffinschmelz- und -dosiervorrichtung 33 eingeschaltet, so läuft die Förderpumpe 13 an. Nach Öffnen des magnetisch betätigbaren Ventils 6 erfolgt über den Zeitraum der Bitumenförderung eine Paraffinzugabe proportional zum Bitumenvolumenstrom über die Leitung 8, bis das Ventil 6 geschlossen wird, woraufhin die Förderpumpe 13 zur Durchmischung des Paraffins in dem Paraffintank 17 weiterbetrieben werden kann. Durch diese frühzeitige Paraffinzufuhr in die Bitumenzuförderung zu dem Rohrmischer 10 der mechanischen Vormischstufe und die gute Verteilung des Paraffins in der Bindemittelkomponente des Asphaltgemisches läßt sich die Prozeßtemperatur in dem Asphaltmischer 35 um ca. 20 bis 30° C senken, was einen erheblichen Energieeinspareffekt mit sich bringt.

Neben einer kontinuierlichen Paraffinzufuhr ist auch ein diskontinuierlicher Betrieb möglich. Hierzu ist in der Asphaltherstellungsvorrichtung 34 eine Bitumenwaage 31 vorgesehen, der über die Bitumenleitung 37 Bitumen zugeführt wird. Dieser Bitumenleitung 37 kann wie bei dem oben beschriebenen kontinuierlichen Betrieb Paraffin über eine Leitung 8b zugeführt werden, wobei es jedoch auf eine volumetrische Proportionalität hinsichtlich des Bitumenstromes nicht notwendigerweise ankommt, da das Bitumen zunächst in einem Behälter der Waage 31 gesammelt wird. Eine kontinuierliche Zufuhr kann jedoch zu einer besseren Durchmischung beitragen. Alternativ oder in Ergänzung hierzu kann eine vorbestimmte Paraffinmenge auch über eine eigene Leitung 8a bzw. einen eigenen Stutzen direkt in den Behälter der Bitumenwaage 31 gefördert werden.

Bei der Paraffineinleitung über den separaten Stutzen besteht die Möglichkeit eines Sauerstoffkontaktes und damit einer Oxidation. Eine Paraffinzufuhr unter Sauerstoffausschluß läßt sich durch die zuvor genannte, unmittelbare Kopplung der Leitung 8b mit der Bitumenleitung 37 erreichen.

Die Zufuhr der Bitumenmenge und der Paraffinmenge kann gravimetrisch über die Bitumenwaage 31 gesteuert werden, wobei die Chargenzusammensetzüng vorgegeben wird. In diesem Fall kann die Förderung des Bitumens und des Paraffins nacheinander erfolgen, wodurch der Gemischanteil jeder Komponente getrennt an der Bitumenwaage feststellbar ist. Bei einer zeitgleichen Befüllung des Waagenbehälters kann die Mengenüberwachung des Paraffins über die Durchflußmeßeinrichtung 7 durchgeführt werden. Vorteilhaft ist hierbei eine zyklische Schichtung des Paraffins und des Bitumens in dem Wiegebehälter der Bitumenwaage 31, um bereits in dem Wiegebehälter eine Vorvermischung zu erreichen. Das Absperrventil 6 wird hierzu entsprechend über eine Steuer- bzw. Regelungsvorrichtung getaktet, wobei die Durchflußparameter der Durchflußmeßeinrichtung 7 sowie gegebenenfalls weitere Signale der Bitumenwaage 31 verwendet werden, die der Masse oder dem Volumen von in dem Waagenbehälter befindlichen Fluid entsprechen.

Wird hingegen das Paraffin der Bitumenleitung 37 vor der Bitumenwaage 31 zugeführt, so erfolgt vorzugsweise eine volumetrische Zudosierung des Paraffins in den Bitumenstrom. An der Waage 31 wird dann lediglich das Gesamtgewicht einer Charge gemessen.

Die Abförderung aus dem Waagenbehälter erfolgt über Förderpumpen 32, wobei diese das Gemisch entweder direkt aus dem Behälter der Bitumenwaage 31 absaugen, oder aber mit einer Leitung gekoppelt sind, in die der Behälterinhalt nach Öffnen einer Bodenentleerungsklappe 30 strömt. Die Förderpumpen 32 fördern das Gemisch wieder an den Eingang des Rohrmischers 10 bzw. in die Eindüsleitung zum Rohrmischer 10. Als Pumpen 32 können hier beispielsweise Zahnradpumpen oder Schraubenspindelpumpen verwendet werden.

Selbstverständlich müssen nicht stets alle der dargestellten Dosiersysteme gleichzeitig zum Einsatz kommen. Vielmehr können diese auch einzeln oder in Unterkombination vorgesehen werden.

Alle Vorgänge zur Einstellung der Temperatur des Paraffins und des Wärmeträgerfluids sowie zur Einstellung der abzugebenden Paraffinmenge werden von einer nicht in der Zeichnung dargestellten Steuer- und/oder Regelvorrichtung übernommen, die in der transportablen Einheit, d.h. in der Paraffinschmelz- und dosiervorrichtung 33 vorgesehen ist.

Weiterhin sind geeignete Eingabevorrichtungen vorgesehen, mit denen die Zudosierung der Paraffinmenge stufenlos gewählt werden kann. Die Steuer und/oder Regelvorrichtung übernimmt dann, je nach dem ob eine kontinuierliche oder diskontinuierliche Betriebsweise eingestellt ist, die Bestimmung der Paraffindosis sowie die dazu erforderliche Einstellung der Betriebsparameter, insbesondere die Einstellung des Ventils 6 und der Förderpumpen 13, 32, um das gewünschte Mischungsverhältnis zu gewährleisten. Überdies kann die Zugabetemperatur des Paraffins über entsprechende Eingabevorrichtungen gewählt werden. Die Steuer- und/oder Regelvorrichtung stellt dann die entsprechenden Temperaturen in dem Paraffintank 17, dem Wärmeträgerfluid sowie in der Leitungen und Armaturen ein und überwacht bzw. regelt die Temperaturen auf dem zugehörigen Niveau ein.

Die Anlage kann mit verschiedenen Bedienungsregimen konzipiert werden. Vorzugsweise werden alle Einstellmöglichkeiten an einem Ort, d.h. in einer Befehlszentrale konzentriert, wo auch die Anzeigen der Betriebsparameter zusammenlaufen. Die Befehlszentrale kann in dem Container oder auch in einem separaten Fernbedienungsmodul untergebracht werden, das als mobiles Bedienungstableau ausgebildet ist. Auch eine Duplizierung, d. h. die Verwendung einer containerintegrierten wie externen Befehlszentrale ist möglich, wobei diese dann über eine Datenschnittstelle miteinander koppelbar sind. Die externe Befehlszentrale kann beispielsweise zeitweilig in der Meß- bzw. Steuerwarte der Asphaltaufbereitungsvorrichtung 34 untergebracht werden.

In einer Variante mit einer externen Befehlszentrale kann die Programmierung von dort aus erfolgen. Dies hat den Vorteil, daß der Aufwand an Eingabevorrichtungen an der Paraffinschmelz- und -dosiervorrichtung auf ein Minimum reduziert werden kann, d.h. auf die für die Sicherheit notwendigen Vorrichtungen. Eine Sollwerteingabe ist dann lediglich in der externen Befehlszentrale vorgesehen.

In der containerintegrierten und/oder externen Befehlszentrale erfolgt die Anzeige sämtlicher Temperaturwerte sowie die Auswertung des hier aus Zählimpulsen bestehenden Durchflußsignals der Paraffindurchflußmeßvorrichtung 7. Zudem können die Temperaturwerte von dort aus eingestellt werden.

Zweckmäßigerweise erfolgt die Darstellung der Prozeßparameter über ein Display, das vorzugsweise alle Temperaturen sowie die Paraffindosis anzeigt. Weitere Informationen zur Chargenvorwahl oder Gesamtmengenangaben können optional realisiert werden. Eine Anzeige von Störungen erfolgt programmgesteuert durch die Ausgabe von Klartextanweisungen.

## Patentansprüche

1. System zum Anschluß an eine Asphaltaufbereitungsvorrichtung und zur Verfügungstellung von Paraffin zum Zwecke der Aufbereitung eines einen Paraffinanteil enthaltenden Asphaltgemisches, umfassend:
eine Paraffinschmelz- und -dosiervorrichtung (33) mit einem Paraffintank (17) zum Schmelzen und zur Lagerung des aufgeschmolzenen Paraffins, einer Heizvorrichtung (1, 2, 29) zur indirekten Beheizung des Inhaltes des Paraffintanks (17) und einer Dosiereinheit (12, 13) zur Förderung einer einstellbaren Paraffinmenge aus einem Paraffintank (17) in das Bitumen des Asphaltgemisches,
eine Eingabevorrichtung zur Vorgabe eines gewünschten Paraffingehaltes in dem Asphaltgemisch,
eine Steuer und/oder Regelvorrichtung zur Einstellung der von der Paraffinschmelz- und -dosiervorrichtung abzugebenden Paraffindosis in Abhängigkeit der angeförderten Menge des Bitumens des Asphaltgemisches und des eingegebenen Paraffingehaltesund eine Leitung (8) zur Paraffinzufuhr, die stromauf oder am Eingang der Asphaltaufbereitungsvorrichtung (10, 35) in eine Bitumen- Zufuhrvorrichtung (36) mündet.

2. System nach Anspruch 1, **dadurch gekennzeichnet, daß** eine Vormischvorrichtung (10) für das Bitumens mit dem Paraffin vorgesehen ist, in welche die Bitumen- Zufuhrvorrichtung (36) das Bitumen über eine Eindüsvorrichtung mündet.

3. System nach einem der Ansprüche 1 bis 2, **dadurch gekennzeichnet, daß** die Steuervorrichtung die Zudosierung von Paraffin in die Bitumen- Zufuhrvorrichtung (36) in Abhängigkeit des Volumenstromes das Bitumens des Bitumens steuert.

4. System nach einem der Ansprüche 1 bis 3, **dadurch gekennzeichnet, daß** die Steuervorrichtung die Zudosierung von Paraffin in Abhängigkeit von der Masse das Bitumens des Asphaltgemisches steuert.

5. System nach Anspruch 4, **dadurch gekennzeichnet, daß** eine Wägevorrichtung (31) mit einem Sammelbehälter vorgesehen ist, und die Steuer- und/oder Regelvorrichtung derart ausgebildet ist, daß vorbestimmte Mengen des Bitumens und des Paraffins in den Behälter gefördert werden, und daß bei Erreichen einer vorbestimmten Gesamtmenge der Behälterinhalt zur Asphaltaufbereitung über eine gemeinsame Förderleitung weitergeleitet wird, wohingegen zur Anförderung des bitumens und des paraffins separate Leitungen (37, 8a) vorgesehen sind.

6. System nach Anspruch 4 oder 5, **dadurch gekennzeichnet, daß** eine Paraffinzufuhrleitung (8b) stromauf der Wägevorrichtung (31) in eine Bitumen zufuhrleitung (37) mündet.

7. System nach Anspruch 5 oder 6, **dadurch gekennzeichnet, daß** in der Förderleitung zwischen dem Behälter der Wägevorrichtung (31) und der Zufuhrvorrichtung (36) des Bitumens stromauf oder am Eingang der Asphaltaufbereitungsvorrichtung (10, 35) eine Förderpumpe (32), insbesondere eine Zahnradpumpe oder Schraubenspindelpumpe, angeordnet ist.

8. System nach Anspruch 1, **dadurch gekennzeichnet, daß** die Dosiereinheit eine Förderpumpe (13) zum Ansaugen von flüssigem Paraffin aus dem Paraffintank (17) und zum Transport in eine Abgabeleitung (8, 8a, 8b) aufweist, wobei der Förderpumpe (13) in der Abgabeleitung ein Überströmventil (12) mit einem einstellbaren Druckniveau nachgeschaltet ist, derart, daß überschüssiges Paraffin in den Paraffintank (17) zurückgeleitet wird.

9. System nach Anspruch 8, **dadurch gekennzeichnet, daß** die Dosiervorrichtung ein steuerbares Absperrventil (6) aufweist, das in der Abgabeleitung angeordnet ist, und das zur Abgabe von Paraffin in Abhängigkeit eines Fördersignals zum Öffnen und Schließen steuerbar ist.

10. System nach Anspruch 8, **dadurch gekennzeichnet, daß** die Dosiervorrichtung ein Durchflußventil (6) aufweist, das in der Abgabeleitung angeordnet ist, und das zur Einstellung der Abgabemenge von Paraffin in Abhängigkeit eines Mengensignals gesteuert wird.

11. System nach einem der Ansprüche 8 bis 10, **dadurch gekennzeichnet, daß** die Dosiervorrichtung eine Durchflußmeßvorrichtung (7) aufweist, die in der Abgabeleitung angeordnet ist.

12. System nach Anspruch 1, **dadurch gekennzeichnet, daß** die Heizvorrichtung eine Kreislaufleitung (1, 2) mit einer sich in den Paraffintank (17) erstreckenden Wärmetauschvorrichtung (16) aufweist, die mit einem Wärmeträgerfluid befüllt ist, und die Heizvorrichtung einen Erhitzer (29) aufweist, an den die Kreislaufleitung (1, 2) angeschlossen ist.

13. System nach Anspruch 12, **dadurch gekennzeichnet, daß** die Kreislaufleitung (1, 2) eine die Wärmetauschvorrichtung (16) überbrückende Verbindung aufweist, die außerhalb des Paraffintanks (17) verläuft, wobei der überbrückenden Verbindung und der Wärmetauschvorrichtung (16) ein Umschaltventil (23) vorgeschaltet ist, derart, daß in Abhängigkeit eines die Temperatur in dem Paraffintank (17) repräsentierenden Signals das Wärmeträgerfluid mittels des Umschaltventils (23) entweder über die Wärmetauschvorrichtung oder aber über die überbrückende Verbindung unter Absperrung des jeweils anderen Teils zirkuliert wird.

14. System nach Anspruch 12 oder 13, **dadurch gekennzeichnet, daß** der Wärmeträgerfluidkreislauf (1, 2) nach außen abgeschlossen und inertgasüberlagert ist.

15. System nach Anspruch 1, **dadurch gekennzeichnet, daß** die Steuer- und/oder Regelvorrichtung zur Einstellung der Temperatur in dem Paraffintank (17) und zur Einstellung der mittels der Dosiereinheit (12, 13) abzugebenden Paraffinmenge ausgebildet ist.

16. System nach Anspruch 15, **dadurch gekennzeichnet, daß** die Steuer- und/oder Regelvorrichtung über eine Datenleitung mit einer externen Befehlszentrale koppelbar ist, die vorzugsweise bei der Asphaltaufbereitungsvorrichtung angeordnet ist.

17. System nach Anspruch 16, **dadurch gekennzeichnet, daß** eine Sollwerteingabevorrichtung lediglich in der Befehlszentrale vorgesehen ist.

18. System zur Aufbereitung eines chemischen Gemisches nach einem der Ansprüche 1 bis 17, **dadurch gekennzeichnet, daß** die Asphaltaufbereitungsvorrichtung (34) eine mechanische Vormischvorrichtung (10) zum Vermengen von Paraffin mit dem Bitumen aufweist.

19. System nach einem der Ansprüche 1 bis 15, **dadurch gekennzeichnet, daß** die Paraffinschmelz- und -dosiervorrichtung (33), der Paraffintank (17) zum Aufschmelzen von Paraffin und zur Lagerung des aufgeschmolzenen Paraffins, die Heizvorrichtung (1, 2, 29) zur indirekten Beheizung des Inhaltes des Paraffintanks, und die Dosiereinheit (12, 13) zur gesteuerten Abgabe von Paraffin aus dem Paraffintank (17) gemeinsam an einem Rahmen unter Bildung einer transportablen Einheit gelagert sind.

20. System nach Anspruch 19, **dadurch gekennzeichnet, daß** der Rahmen in einen im wesentlichen quaderförmigen Container integriert ist, wobei der Paraffintank (17), die Heizvorrichtung und die Dosiereinheit (12, 13) in dem Container aufgenommen sind.

## Claims

1. A system for being connected to an asphalt-preparing apparatus and for providing paraffin for the purpose of preparing an asphalt mixture containing a paraffin component, said system comprising:
a paraffin melting and metering apparatus (33), which comprises a paraffin tank (17) for melting and for storing the molten paraffin, a heating apparatus (1, 2, 29) for indirect heating of the content of the paraffin tank (17), and a metering unit (12, 13) for feeding an adjustable quantity of paraffin from a paraffin tank (17) into the bitumen of the asphalt mixture,
an input apparatus for setting a desired paraffin content of the asphalt mixture,
an open- and/or closed-loop control apparatus for adjusting the paraffin dose to be supplied by the paraffin melting and metering apparatus as a function of the feed quantity of the bitumen of the asphalt mixture and of the input desired paraffin content, and
a paraffin supply line (8), which opens into a bitumen supply apparatus (36) upstream or at the entrance to the asphalt-preparing apparatus (10, 35).

2. System according to claim 1, **characterised in that** an apparatus (10) for pre-mixing the bitumen with the paraffin is provided, into which pre-mixing apparatus the bitumen supply apparatus (36) opens via an injection apparatus.

3. System according to any one of claims 1 to 2, **characterised in that** the control apparatus controls the metering of paraffin to the bitumen supply apparatus (36) as a function of the volume flow of bitumen.

4. System according to any one of claims 1 to 3, **characterised in that** the control apparatus controls the metering of paraffin as a function of the mass of bitumen in the asphalt mixture.

5. System according to claim 4, **characterised in that** a weighing apparatus (31) comprising a storage tank is provided, and that the open- and/or closed-loop control apparatus is provided such that predetermined quantities of bitumen and paraffin are fed into the tank, and that when a predetermined total quantity is achieved, the content of the tank is passed on for asphalt preparation via a common feed line, whereas separate lines (37, 8a) are provided for supplying bitumen and paraffin.

6. System according to claim 4 or 5, **characterised in that** a paraffin supply line (8b) opens into a bitumen supply line (37) upstream of the weighing apparatus (31).

7. System according to claim 5 or 6, **characterised in that** a feed pump (32), in particular a geared pump or a screw-spindle pump, is arranged in the feed line, between the tank of the weighing apparatus (31) and the bitumen supply apparatus (36), upstream or at the entrance to the asphalt-preparing apparatus (10, 35).

8. System according to claim 1, **characterised in that** the metering unit comprises a feed pump (13) for drawing liquid paraffin from the paraffin tank (17) and for transporting the liquid paraffin into a discharge line (8, 8a, 8b), wherein an overflow valve (12) with an adjustable pressure level is arranged following the feed pump (13) in the discharge line so that any excess paraffin is returned to the paraffin tank (17).

9. System according to claim 8, **characterised in that** the metering unit comprises a controllable check valve (6) which is arranged in the discharge line and which is controllable so as to discharge paraffin as a function of a feed signal for opening and closing.

10. System according to claim 8, **characterised in that** the metering unit comprises a flow valve (6), which is arranged in the discharge line and is controlled so as to adjust the discharged quantity of paraffin as a function of a quantity signal.

11. System according to any one of claims 8 to 10, **characterised in that** the metering unit comprises a flow-measuring apparatus (7) arranged in the discharge line.

12. System according to claim 1, **characterised in that** the heating apparatus comprises a circuit line (1, 2) having a heat exchanging apparatus (16) extending into the paraffin tank (17) and filled with a heat carrying fluid, and that the heating apparatus comprises a heater (29) to which the circuit line (1, 2) is connected.

13. System according to claim 12, **characterised in that** the circuit line (1, 2) comprises, extending outside the paraffin tank (17), a connection bridging the heat exchanging apparatus (16), wherein a switch valve (23) is arranged preceding the bridging connection and the heat exchanging apparatus (16) such that, as a function of a signal representing the temperature in the paraffin tank (17), the heat carrying fluid is circulated, by means of the switch valve (23) through one of the heat exchanging apparatus or the bridging connection, closing off the respective other one of the heat exchanging apparatus or the bridging connection.

14. System according to claim 12 or 13, **characterised in that** the heat carrying fluid circuit (1, 2) is outwardly sealed and covered by inert gas.

15. System according to claim 1, **characterised in that** the open- and/or closed-loop control apparatus is provided for adjustment of the temperature in the paraffin tank (17) and for adjustment of the paraffin quantity to be discharged by means of the metering unit (12, 13).

16. System according to claim 15, **characterised in that** the open- and/or closed-loop control apparatus can be coupled to an external control centre via a data line, said control centre preferably being arranged near the asphalt-preparing apparatus.

17. System according to claim 16, **characterised in that** a desired value input apparatus is provided only in the control centre.

18. System for preparing a chemical mixture according to any one of claims 1 to 17, **characterised in that** the asphalt preparing apparatus (34) comprises a mechanical pre-mixing apparatus (10) for mixing paraffin with bitumen.

19. System according to any one of claims 1 to 15, **characterised in that** the paraffin melting and metering apparatus (33), the paraffin tank (17) for melting paraffin and for storing the molten paraffin, the heating apparatus (1, 2, 29) for indirect heating of the content of the paraffin tank, and the metering unit (12, 13) for controlled discharge of paraffin from the paraffin tank (17) are jointly supported on a frame, forming a transportable unit.

20. System according to claim 19, **characterised in that** the frame is intregrated in a substantially parallelepiped-shaped container, which container accommodates the paraffin tank (17), the heating apparatus, and the metering unit (12, 13).

## Revendications

1. Système à raccorder à un dispositif de préparation de l'asphalte et destiné à la distribution de paraffine, pour la préparation d'un mélange asphaltique contenant une part de paraffine, comprenant :
un dispositif de fusion et de dosage de la paraffine (33) avec un réservoir de paraffine (17) pour la fusion et pour le stockage de la paraffine fondue, un dispositif de chauffage (1, 2, 29) pour le chauffage indirect du contenu du réservoir de paraffine (17) et une unité de dosage (12, 13) pour le refoulement dans le bitume du mélange asphaltique d'un débit de paraffine réglable depuis un réservoir de paraffine (17),
un dispositif d'alimentation pour l'ajout d'une teneur de paraffine souhaitée dans le mélange asphaltique,
un dispositif de commande et/ou de régulation pour le réglage de la dose de paraffine à délivrer par le dispositif de fusion et de dosage de la paraffine en fonction du débit refoulé du bitume du mélange désirée
asphaltique et de la teneur de paraffine ajoutée, et une conduite (8) pour l'amenée de paraffine, débouchant dans un dispositif d'amenée du bitume (36) en amont ou à l'entrée du dispositif de préparation de l'asphalte (10, 35).

2. Système selon la revendication 1, **caractérisé en ce qu'**un dispositif de pré-mélange (10) du bitume avec la paraffine est prévu, où débouche le dispositif d'amenée du bitume (36) via un dispositif à buse d'injection.

3. Système selon l'une des revendications 1 à 2, **caractérisé en ce que** le dispositif de commande commande le dosage de la paraffine dans le dispositif d'amenée du bitume (36) en fonction du débit volumique du bitume.

4. Système selon l'une des revendications 1 à 3, **caractérisé en ce que** le dispositif de commande commande le dosage de la paraffine en fonction de la masse du bitume du mélange asphaltique.

5. Système selon la revendication 4, **caractérisé en ce qu'**un dispositif de pesage (31) est prévu avec un récipient collecteur, **en ce que** le dispositif de commande et/ou de régulation est configuré de telle sorte que des débits définis du bitume et de la paraffine soient refoulés dans le récipient collecteur, et **en ce que** le contenu du récipient soit transmis par une conduite de refoulement commune pour la préparation de l'asphalte lorsqu'un débit global défini est atteint, des conduites séparées (37, 8a) étant en revanche prévues pour le refoulement du bitume et de la paraffine.

6. Système selon la revendication 4 ou 5, **caractérisé en ce qu'**une conduite d'amenée de paraffine (8b) débouche dans une conduite d'amenée de bitume (37) en amont du dispositif de pesage (31).

7. Système selon la revendication 5 ou 6, **caractérisé en ce qu'**une pompe de refoulement (32), notamment une pompe à engrenage ou une pompe à vis est disposée sur la conduite de refoulement entre le récipient du dispositif de pesage (31) et le dispositif d'amenée du bitume (36) en amont ou à l'entrée du dispositif de préparation de l'asphalte (10, 35).

8. Système selon la revendication 1, **caractérisé en ce que** l'unité de dosage comporte une pompe de refoulement (13) pour le pompage de la paraffine liquide du réservoir de paraffine (17) et pour le transport vers une conduite d'alimentation (8, 8a, 8b), une vanne de trop-plein (12) à niveau de pression réglable étant disposée en aval de ladite pompe de refoulement (13) sur la conduite d'alimentation, de manière à retourner la paraffine excédentaire vers le réservoir de paraffine (17).

9. Système selon la revendication 8, **caractérisé en ce que** de dosage comporte une vanne d'arrêt (6) commandable l'unité disposée sur la conduite d'alimentation, laquelle est commandable en fonction d'un signal de refoulement pour l'ouverture et la fermeture pour la délivrance de paraffine.

10. Système selon la revendication 8, **caractérisé en ce que** l'unité de dosage comporte une vanne d'écoulement (6) disposée sur la conduite d'alimentation et commandée en fonction d'un signal de débit pour le réglage du débit d'alimentation de la paraffine.

11. Système selon l'une des revendications 8 à 10, **caractérisé en ce que** l'unité de dosage comporte un dispositif de mesure de débit d'écoulement (7) disposé sur la conduite d'alimentation.

12. Système selon la revendication 1, **caractérisé en ce que** le dispositif de chauffage comporte une conduite de circulation (1, 2) avec un dispositif d'échange de chaleur (16) s'étendant dans le réservoir de paraffine (17), lequel est rempli d'un fluide caloporteur, et **en ce que** le dispositif de chauffage comporte un réchauffeur (29) auquel la conduite de circulation (1, 2) est raccordée.

13. Système selon la revendication 12, **caractérisé en ce que** la conduite de circulation (1, 2) comporte un raccord court-circuitant le dispositif d'échange de chaleur (16) et situé à l'extérieur du réservoir de paraffine (17), une vanne d'inversion (23) étant montée en amont du raccord à court-circuit et du dispositif d'échange de chaleur (16), de telle manière qu'en fonction d'un signal du fluide caloporteur représentatif de la température dans le réservoir de paraffine (17), la circulation ait lieu au moyen de la vanne d'inversion (23) soit par le dispositif d'échange de chaleur, soit par le raccord à court-circuit, par fermeture de l'autre partie correspondante.

14. Système selon la revendication 12 ou 13, **caractérisé en ce que** le circuit de fluide caloporteur (1, 2) est isolé vers l'extérieur et recouvert de gaz inerte.

15. Système selon la revendication 1, **caractérisé en ce que** le dispositif de commande et/ou de régulation est configuré pour le réglage de température dans le réservoir de paraffine (17) et pour le réglage de débit de paraffine à délivrer au moyen de l'unité de dosage (12, 13).

16. Système selon la revendication 15, **caractérisé en ce que** le dispositif de commande et/ou de régulation est raccordable à une centrale d'instructions externe via une ligne de données, préférentiellement disposée près du dispositif de préparation de l'asphalte.

17. Système selon la revendication 16, **caractérisé en ce qu'**un dispositif d'alimentation suivant une valeur de consigne est exclusivement prévu dans la centrale d'instructions.

18. Système de préparation d'un mélange chimique selon l'une des revendications 1 à 17, **caractérisé en ce que** le dispositif de préparation de l'asphalte (34) comporte un dispositif de pré-mélange mécanique (10) pour le mélange de paraffine avec le bitume.

19. Système selon l'une des revendications 1 à 15, **caractérisé en ce que** le dispositif de fusion et de dosage de la paraffine (33), le réservoir de paraffine (17) pour la fusion et pour le stockage de la paraffine fondue, le dispositif de chauffage (1, 2, 29) pour le chauffage indirect du contenu du réservoir de paraffine et l'unité de dosage (12, 13) pour l'alimentation en paraffine commandée depuis le réservoir de paraffine (17), sont logés ensemble contre un châssis et constituent une unité transportable.

20. Système selon la revendication 19, **caractérisé en ce que** le châssis est intégré à un conteneur essentiellement parallélépipédique, le réservoir de paraffine (17), le dispositif de chauffage et l'unité de dosage (12, 13) étant logés dans le conteneur.
